# EUROPEAN PATENT SPECIFICATION

(11) **EP 4 652 721 B1**
(45) Date of publication and mention of the grant of the patent: **23.09.2026**
(21) Application number: 23701352.9
(22) Date of filing: 18.01.2023
(51) Int. Cl.: H04L 67/12

(54) **IMPROVED INTENT REQUESTS AND PROPOSALS USING PROPOSAL TIMES AND ACCURACY LEVELS**
VERBESSERTE ABSICHTSANFRAGEN UND -VORSCHLÄGE UNTER VERWENDUNG VON VORSCHLAGSZEITEN UND GENAUIGKEITSNIVEAUS
DEMANDES ET PROPOSITIONS D'INTENTION AMÉLIORÉES UTILISANT DES TEMPS DE PROPOSITION ET DES NIVEAUX DE PRÉCISION

(43) Date of publication of application: 26.11.2025
(73) Proprietor: Telefonaktiebolaget LM Ericsson (publ), 164 83 Stockholm (SE)
(72) Inventor: D'ANGELO, Mirko, 414 76 Göteborg (SE); HANNU, Hans, 976 31 LULEÅ (SE); STJERNHOLM, Paul, 181 60 LIDINGÖ (SE)
(74) Representative: Ericsson
(86) International application number: PCT/EP2023/051142
(87) International publication number: WO 2024/153327

(56) References cited:
- US-A1- 2017 126 792
- "Zero-touch network and Service Management (ZSM); Intent-driven autonomous networks; Generic aspects", no. V0.2.5, 12 October 2022 (2022-10-12), pages 1 - 57, XP014441193, Retrieved from the Internet <URL:ftp://docbox.etsi.org/ISG/ZSM/Open/Drafts/011_IntentDrv/ZSM-011_IntentDrvv025.zip ZSM-011_IntentDrvv025_clean.docx> [retrieved on 20221012]

## Description

### TECHNICAL FIELD

Embodiments of the invention relate to the field of autonomous networks; and more specifically, to intent management in autonomous networks.

### BACKGROUND ART

Autonomous networks are networks and software platforms that can sense their environment and adapt their behavior accordingly with little to no human input. Conventional autonomous networks operate using an intent framework where intents are communicated between an intent owner and an intent handler within the autonomous network. Intent requests sent by intent owners include specific times or repeating periods when intent reports (also known as proposals) should be sent by intent handler.

Document: "Zero-touch network and Service Management (ZSM); Intent-driven autonomous networks; Generic aspects",no. V0.2.5 12 October 2022, pages 1-57 discloses an intent based autonomous network architecture.

### SUMMARY

A method for an intent handler implemented by a first electronic device is disclosed. The method includes receiving, at the intent handler implemented by the first electronic device, an intent request from an intent owner implemented by a second electronic device, where the intent request comprises one or more expectations and one or more parameters including a maximum proposal time parameter, determining a proposal time based on an estimated time to process the intent request, in response to determining that the proposal time is less than or equal to the maximum proposal time parameter, determining the proposal for the intent request based on the one or more expectations, where the one or more expectations define requirements for a service to be delivered and the proposal includes one or more report parameters for an estimated delivery of the service using an autonomous domain, and in response to determining that the proposal time is less than or equal to the maximum proposal time parameter, sending, to the intent owner, the proposal.

A first electronic device implementing an intent handler is disclosed, the first electronic device including a processor and a memory, the memory containing instructions executable by the processor whereby the first electronic device is operative to receive, at the intent handler implemented by the first electronic device, an intent request from an intent owner implemented by a second electronic device, where the intent request comprises one or more expectations and one or more parameters including a maximum proposal time parameter, determine a proposal time based on an estimated time to process the intent request, in response to determining that the proposal time is less than or equal to the maximum proposal time parameter, determine the proposal for the intent request based on the one or more expectations, where the one or more expectations define requirements for a service to be delivered and the proposal includes one or more report parameters for an estimated delivery of the service using an autonomous domain, and in response to determining that the proposal time is less than or equal to the maximum proposal time parameter, send, to the intent owner, the proposal.

### BRIEF DESCRIPTION OF THE DRAWINGS

The invention may best be understood by referring to the following description and accompanying drawings that are used to illustrate embodiments of the invention. In the drawings:
Figure 1 illustrates an exemplary intent communication flow with intent management component, according to some embodiments of the invention.
Figure 2 illustrates another exemplary intent communication flow with intent management component, according to some embodiments of the invention.
Figure 3 illustrates another exemplary intent communication flow with an intent owner and an intent handler, according to some embodiments of the invention.
Figure 4 illustrates an exemplary network architecture with an intent management component, according to some embodiments of the invention.
Figure 5 is a flow diagram of an example method to generate proposals using a maximum proposal time.
Figure 6A illustrates connectivity between network devices (NDs) within an exemplary network, as well as three exemplary implementations of the NDs, according to some embodiments of the invention.
Figure 6B illustrates an exemplary way to implement a special-purpose network device according to some embodiments of the invention.
Figure 6C illustrates various exemplary ways in which virtual network elements (VNEs) may be coupled according to some embodiments of the invention.
Figure 6D illustrates a network with a single network element (NE) on each of the NDs, and within this straightforward approach contrasts a traditional distributed approach (commonly used by traditional routers) with a centralized approach for maintaining reachability and forwarding information (also called network control), according to some embodiments of the invention.
Figure 6E illustrates the simple case of where each of the NDs implements a single NE, but a centralized control plane has abstracted multiple of the NEs in different NDs into (to represent) a single NE in one of the virtual network(s), according to some embodiments of the invention.
Figure 6F illustrates a case where multiple VNEs are implemented on different NDs and are coupled to each other, and where a centralized control plane has abstracted these multiple VNEs such that they appear as a single VNE within one of the virtual networks, according to some embodiments of the invention.
Figure 7 illustrates a general-purpose control plane device with centralized control plane (CCP) software 750), according to some embodiments of the invention.
Figure 8 illustrates an apparatus including a processor, according to some embodiments of the invention.

### DETAILED DESCRIPTION

The following description describes methods and apparatus for improved intent requests and proposals using proposal times and accuracy levels. In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases do not necessarily refer to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

**In** the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

Embodiments of the invention support intent requests that include maximum proposal times and minimum accuracy levels and proposals that include accuracy levels. By including maximum proposal times in intent requests, intent handlers can send their proposals in a range of times instead of at one point in time. Additionally, by including a minimum accuracy level in an intent request, an intent owner can ensure a baseline level of accuracy in the proposals it receives. Finally, by including an accuracy level in the proposal, intent handlers can communicate to intent owners the level to which a proposal can be trusted.

The inclusion of a maximum proposal time in intent requests is advantageous over conventional systems that support a specific time. For instance, when intent requests specify exact times a proposal must be sent, intent owners are often flooded with many proposals at one time instead of receiving the proposals over a more prolonged period of time. This flooding leads to reduced quality of service and inefficiencies. Additionally, intent owners specifying an exact time a proposal must be sent restricts the autonomy of intent handlers who may have to handle proposals from multiple intent owners. This prevents intent handlers from autonomously sending proposals according to optimal time schedules for the intent handlers. **In** contrast, the use of a maximum proposal time prevents flooding intent owners and allows the intent handlers to send proposals according to their own internal priority hierarchy.

The inclusion of a minimum accuracy level in intent requests is advantageous over conventional systems that do not support or include this information. Intent requests without minimum accuracy levels can result in proposals that do not work as intended. For instance, intent handlers can generate proposals using machine learning models that have not been adequately trained, have been trained on inadequate data, or do not have an adequate internal structure. These inadequate models can cause inadequate outputs of the machine learning models, which when incorporated into the proposals, create ineffective proposals. In contract, inclusion of a minimum accuracy level can reduce inefficiencies in processing intent requests for intent handlers who know upon receiving the intent request with the minimum accuracy level that the resources of the intent handlers (e.g., the inadequate machine learning models) cannot support the requisite accuracy level. The intent handlers can therefore reply to the intent owners indicating that the intent request cannot be met without expending excess time and resources to make the same determination.

The inclusion of an accuracy level in proposals is advantageous over conventional systems that do not support or include this information. Intent handlers may send proposals to intent owners with specifications for delivery of a service (e.g., intent handlers send a proposal indicating they can stream a video at a certain bit rate with a certain latency). An intent owner may receive proposals from multiple intent handlers and determine which proposal is best suited for the delivery of the service. Without the inclusion of an accuracy level, an intent owner may choose a proposal that performs worse because the proposal is associated with a low accuracy level. Inclusion of an accuracy level in proposals allows intent owners to make more intelligent decisions about whether a proposal can be properly implemented and whether a proposal is optimal.

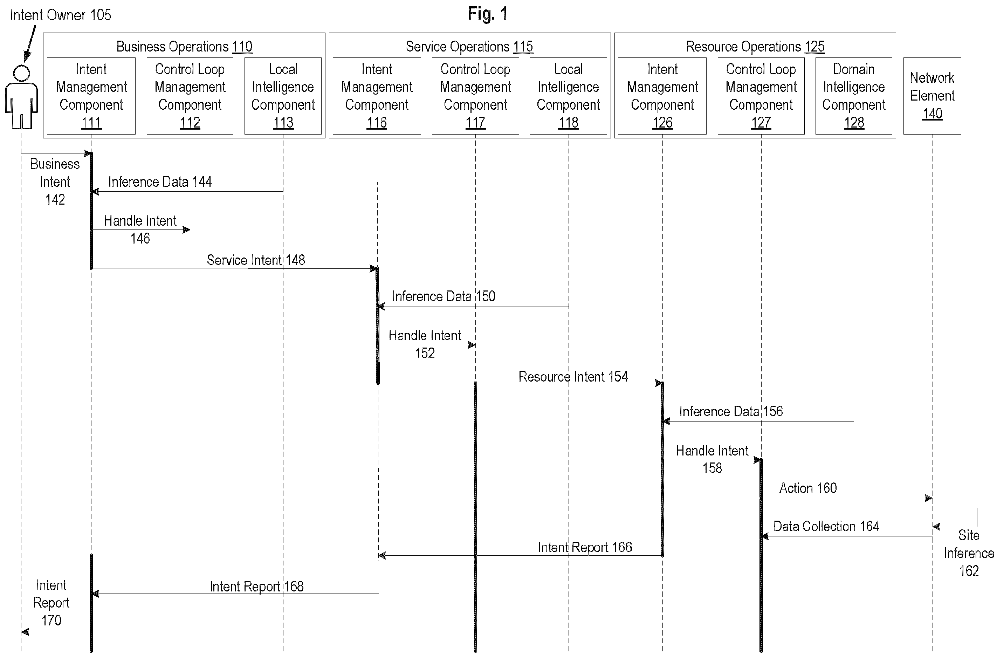

Figure 1 illustrates an exemplary communication flow in an autonomous network. As shown in Figure 1, the autonomous network includes intent owner 105, business operations 110, service operations 115, resource operations 125 and network element 140. The autonomous network includes three operational layers: a business operational layer including business operations 110, a service operational layer including service operations 115, and a resource operational layer including resource operations 125 and network element 140. In some embodiments, each of the operational layers has the capability to run in a self-operating mode such that details of network implementations, operations, and functions within the operational layer are not shown to devices outside of the operational layer.

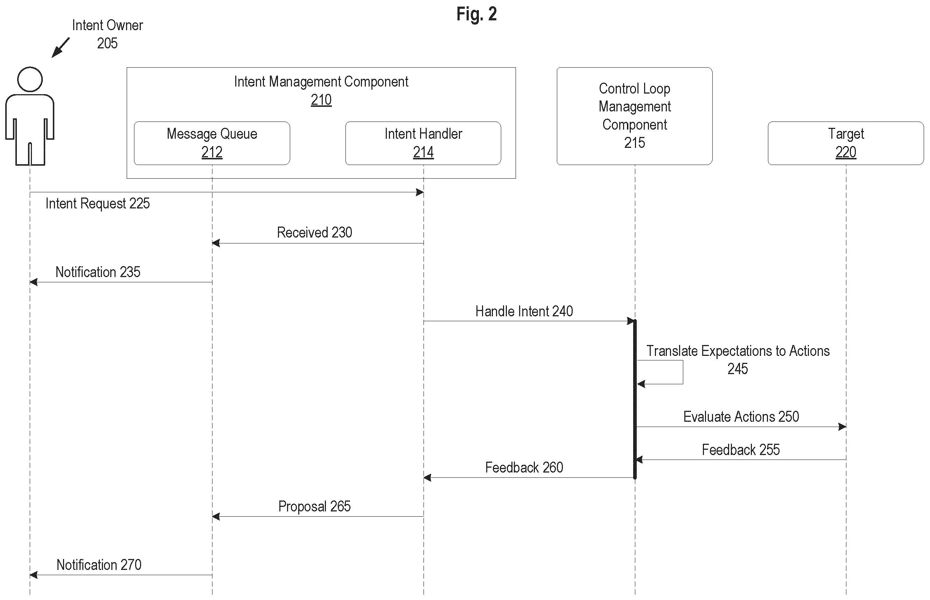

In one embodiment, as shown in Figure 1, intent owner 105 sends intent management component 111 a business intent, such as business intent 142. For example, in one embodiment, intent owner 105 is a toll road operator and sends business intent 142 to intent management component 111 of business operations 110 including requirements to maximize revenue while observing safety and customer experience. In some embodiments, business intent 142 includes an intent request, such as intent request 225 of Figure 2. In some embodiments, business intent 142 includes a maximum proposal time and/or a minimum accuracy level.

Intent management component 111 receives business intent 142 and receives inference data 144 from local intelligence component 113. For example, local intelligence component 113 contains contextual information about what safety and customer experience mean for a specific use case. Intent management component 111 translates the intent using the knowledge from local intelligence component 113 into a directive to handle intent 146 sent to control loop management component 112. Control loop management component 113 analyzes the translated intent, receives contextual data requirements from local intelligence component 113, and determines affected contextual data requirements. For example, control loop management component 113 determines that the requirement to maximize revenue while observing safety and customer experience specifies a higher level of customer experience than exemplary network architecture 400 previously employed. Control loop management component 112 compares estimated results of the change in network with current policies and constraints already defined. For example, control loop management component 112 determines how adapting the network to a higher level of customer service will impact other constraints such as safety.

Intent management component 111 sends actions to managed entities to accommodate the new intent. For example, intent management component 111 sends service intent 148 to intent management component 116 of service operations 115, including a requirement for a guaranteed number of supported users for the network slice (e.g., network slice implemented by autonomous domains 450 and 455). In some embodiments, control loop management component 112 monitors the outcome of the change in requirements and generates an intent report based on this outcome. For example, control loop management component 112 generates intent report 170 based on how exemplary network architecture 400 changes in response to the additional requirement. Intent management component 111 then sends intent report 170 to intent owner 105. Although only one intent owner is illustrated, there may be multiple intent owners. For example, intent owner 105 is a toll road operator, and another intent owner is users of the toll road.

Intent management component 116 receives service intent 148 including the requirement for a guaranteed number of supported users for the network slice implemented by autonomous domains 450 and 455 and receives inference data 150 for service intent 148 from local intelligence component 118. For example, local intelligence component 118 contains information about the number of supported users that certain autonomous domain configurations can support. Intent management component 116 translates service intent 148 using the knowledge from local intelligence component 118 into a handle intent directive 152 sent to control loop management component 117. Control loop management component 117 analyzes the translated intent, receives contextual data requirements from local intelligence component 118, and determines affected contextual data requirements. For example, control loop management component 118 determines that the requirement for a guaranteed number of supported users for the network slice implemented by autonomous domains 450 and 455 requires faster data speeds than currently employed by autonomous domains 450 and 455. Control loop management component 117 compares estimated results of the change in network slice with current policies and constraints already defined. For example, control loop management component 117 determines how boosting data speeds will affect other constraints such as network security.

Intent management component 116 sends actions to managed entities to accommodate the new intent. For example, intent management component 116 sends resource intent 154 to intent management component 126 of resource operations 125 including a data speed requirement. In some embodiments, intent management component 116 sends resource intent 154 to both intent management component 126 and intent management component 431. In some embodiments, control loop management component 117 monitors the outcome of the change in requirements and generates intent report 168 based on this outcome. For example, control loop management component 117 generates an intent report based on how autonomous domains 450 and 455 change in response to the additional data speed requirement. Intent management component 116 then sends intent report 168 to intent management component 111 of business operations 110. In some embodiments, intent management component 111 uses the contents of intent report 168 to generate intent report 170.

Intent management component 126 receives resource intent 154 including the requirement for higher data speeds and receives inference data 156 for the intent from domain intelligence component 128. For example, domain intelligence component 128 contains information about data speeds that certain network elements can accommodate. Intent management component 126 translates resource intent 154 using the knowledge from domain intelligence component 128 into a directive to handle intent 158 sent to control loop management component 127. Control loop management component 127 analyzes the translated intent, receives contextual data requirements from domain intelligence component 128, and determines affected contextual data requirements. For example, control loop management component 128 determines that the requirement for higher data speeds requires an additional network element. Control loop management component 127 compares estimated results of the change in autonomous domain 450 with current policies and constraints already defined. For example, control loop management component 127 determines how an additional network element will affect other constraints such as latency.

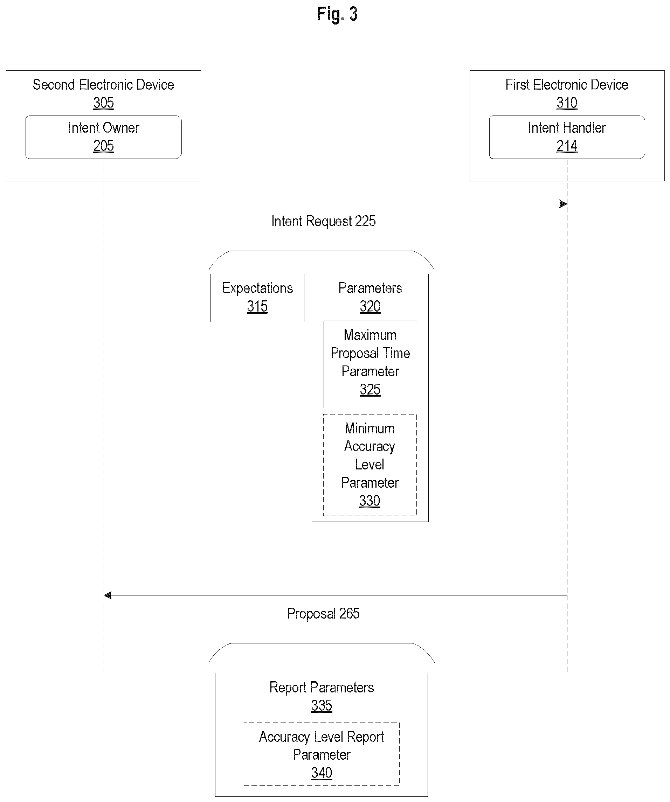

Control loop management component 127 executes action 160 on a network element 140 to accommodate the new intent. For example, control loop management component 127 registers network element 140 as part of autonomous domain 450. In some embodiments, site intelligence 441 uses site inference 162 to determine whether network element 140 can meet the requirements of resource intent 154. For example, site intelligence 441 includes a trained machine learning model which uses requirements from the intent as inputs (e.g., expectations 315 of intent request 225 of Figure 3) and determines the feasibility of satisfying the intent. In some embodiments, site intelligence 441 produces outputs from the inputs. In some embodiments, site intelligence 441 is a machine learning model with a given accuracy level and the accuracy level is therefore associated with outputs of site intelligence 441. In some embodiments, site intelligence 441 produces outputs with an accuracy level associated with the outputs rather than associated with site intelligence 441 generally. In some embodiments, multiple network elements share a single site intelligence component. For example, network elements 140 and 445 in different autonomous domains 450 and 455 use the same site intelligence component. Control loop management component 127 executes data collection 164 on network device 140 to determine data about network device 140 (e.g., latency, security, and data speed requirements) for use in the delivery of a service.

In some embodiments, control loop management component 127 monitors the outcome of the change in requirements and generates intent report 166 based on this outcome. For example, control loop management component 127 generates intent report 166 based on data collection 164. Intent management component 126 then sends intent report 166 to intent management component 116 of service operations 115. In some embodiments, intent management component 116 uses the contents of intent report 166 to generate intent report 168. In some embodiments, intents and reports are sent between systems on the same operational layer. For example, intents are sent from intent management component 126 of autonomous domain 450 to intent management component 431 of autonomous domain 455. In some embodiments, intent report 168 and intent report 170 include an accuracy level report parameter. Further details with regard to intent management and reporting are explained with reference to Figure 2.

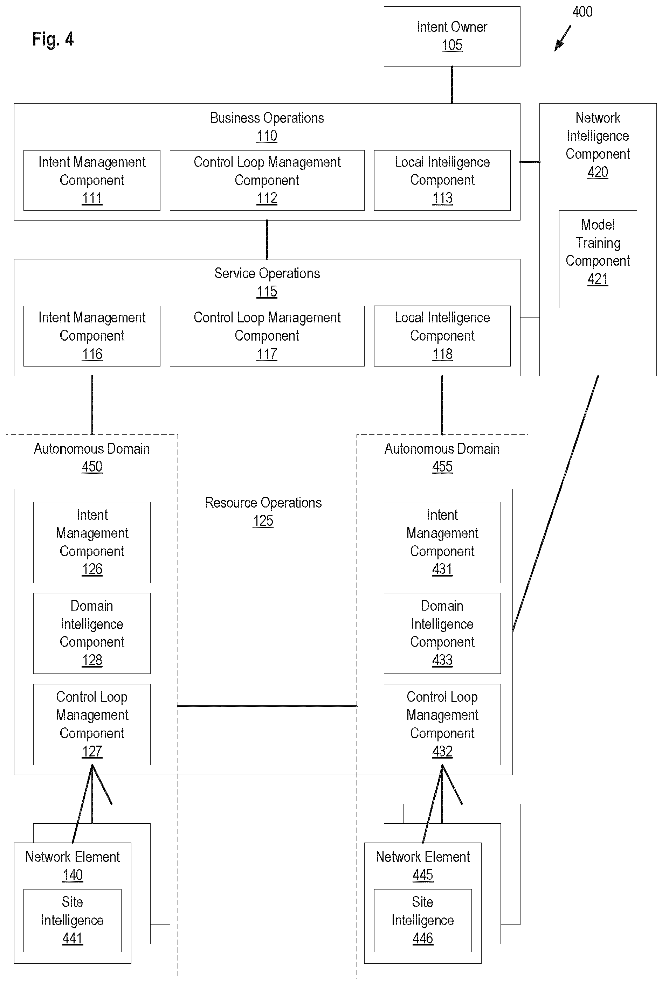

In some embodiments, network intelligence component 420 of Figure 4 provides intelligence services for all three operational layers. For example, network intelligence component 420 includes model training component 421 which trains machine learning models based on data in network intelligence component 420 and sends the trained models to local intelligence component 113 and 118 and domain intelligence components 128 and 433. In some embodiments, network intelligence component 420 receives offline data to tune its training algorithms. For example, network intelligence component 420 receives data about the efficacy of the trained machine learning models and updates model training component 421 based on the data.

Figure 2 illustrates an exemplary intent communication flow with intent management components 210 and control loop management component 215, according to some embodiments of the invention. As shown in Figure 2, intent communication flow includes intent owner 205, intent management component 210, control loop management component 215, and target 220. Intent owner 205 is an entity that sends intent request 225. In some embodiments, intent owner 205 is the topmost intent owner of an autonomous network (e.g., intent owner 105 of Figure 1). In other embodiments, intent owner 205 is an intent management component, such as intent management component 111, 116, 126, or 431 of Figure 4. In some embodiments intent management component 210 and control loop management component 215 are implemented in the same operational layer or autonomous domain of a system. For example, intent management component 210 and control loop management component 215 both belong to service operations, such as service operation 115 of Figure 1. As an alternative example, intent management component 210 and control loop management component 215 both belong to an autonomous domain, such as autonomous domain 450 of Figure 4.

Target 220 is a managed entity of intent management component 210. For example, if intent management component 210 is implemented as an intent management component of service operations (e.g., intent management component 116), target 220 is an intent management component of a managed autonomous domain (e.g., intent management component 126). As an alternative example, if intent management component 210 is implemented as an intent management component of an autonomous domain (e.g., intent management component 126), target 220 is a network element of that autonomous domain (e.g., network element 140). In some embodiments, target 220 is a machine learning model trained to predict the outputs of a network element in response to evaluate actions 250. In such embodiments, feedback 255, feedback 260, and proposal 265 include machine learning model predictions or outputs based on how a network element modeled by target 220 would behave in response to evaluate actions 250.

Intent owner 205 is the entity sending intent requests and intent handler (such as intent management handler 214) is the entity receiving intent requests from the intent owner. As explained above, the intent owner of one intent may be an intent handler of a different intent. Similarly, the intent handler of one intent may be an intent owner of a different intent. Accordingly, intent owner 205 and intent handler 214 are used as terms in reference to a specific intent, intent request 225.

In some embodiments, the external intent API includes functions organized into intent setting, intent negotiation, intent reporting, and profile handling. Intent setting functions include functions for creating, modifying, or deleting intents and for retrieving intent information. Intent setting functions also include functions for adding, updating, or removing expectations from an existing intent object as well as functions for retrieving information for specific expectations. Intent setting functions also include functions for adding context (e.g., inference data), updating or removing context from existing intents or expectations as well as functions for retrieving context from an intelligence component (e.g., local intelligence component 113 and 118 or domain intelligence components 128 and 433 of Figure 4). In some embodiments, intent API functions are handled by multiple components of a single system. For example, some operations are executed by an intent management component while other operations are executed by a control loop management component.

Intent negotiation functions include functions communicating feasibility of requirements (e.g., intent expectations and parameters) as well as including functions indicating preference of solutions and outcomes. In some embodiments, intent negotiation functions include a best intent function, a probe intent function, and a propose intent function. The best intent function is a function where intent owner 205 sends intent request 225 requesting the best value for an outcome based on expectations of intent request 225. For example, intent owner 205 sends intent handler 214 a best intent (e.g., intent request 225) with expectations for a specified quality of experience (e.g., specified data speed/latency) requesting the best security score that can be achieved by intent handler 214 for the specified quality of experience. Intent handler 214 responds with a received message 230 in message queue 212 which message queue 212 sends as notification 235 to intent owner 205.

In some embodiments, intent owner 205 sends intent request 225 again if intent owner 205 does not receive notification 235. In other embodiments, intent owner 205 sends intent request 225 to a different intent handler if intent owner 205 does not receive notification 235. Intent handler 214 sends control loop management component 215 a handle intent directive 240 (e.g., handle intent directive 152 of Figure 1) to handle expectations received in intent request 225. Control loop management component 215 translates the expectations of intent request 225 into actions 245 and sends evaluate actions 250 to target 220. For example, intent handler 214 uses the knowledge from an intelligence component (e.g., local intelligence components 113 and 118 or domain intelligence components 128 and 433 of Figure 4) to translate expectations of intent request 225 into actions which are sent to target 220 as evaluate actions 250. In some embodiments, control loop management component 215 uses reasoning procedures (such as by using a local or domain intelligence component 113, 118, 128, and/or 433) such as reasoning inference machine learning model inference, and/or machine reasoning to translate the expectations of intent request 225 into evaluate actions 250. Control loop management component 215 executes the translated action (e.g., evaluate actions 250) on target 220. For example, control loop management component 215 executes an action, such as action 160 of Figure 1 on target 220.

In some embodiments, target 220 responds with feedback 255 (e.g., an ok/nok) indicating whether target 220 includes the resources necessary to perform the action. If target 220 includes the resources necessary, control loop management component 215 determines feedback 260 including the best value for the outcome (e.g., best security score that can be achieved) and sends feedback 260 to intent handler 214. Intent handler uses feedback 260 to generate proposal 265 including an estimated delivery of a service, sent as a propose intent function through message queue 212 as notification 270 to intent owner 205. The propose intent function is a response to the best intent function where intent handler 214 sends proposal 265 including report parameters 335 indicating the best value for the outcome based on the expectations of intent request 225. For example, intent handler 214 sends the best security score that can be achieved according to the quality of experience requirements of intent request 225. In some embodiments the propose intent function is a proposal for an estimated delivery of a service in an autonomous network such as autonomous network 400 of Figure 4.

The probe intent request is a function where intent owner 205 can explore whether a specific intent is possible without intent handler 214 implementing the intent. For example, intent owner 205 sends intent handler 214 a propose intent (e.g., intent request 225) with expectations for a specified quality of experience. Intent handler 214 does not implement the intent but estimates what would happen if the intent was implemented. Proposal 265 therefore includes estimates for operation of intent request 225. In some embodiments, intent handler 214 implements the intent on target 220 in response to receiving the probe intent request. For example, intent handler 214 allocated network resources, such as target 220, to delivery of a service in response to the probe intent request.

Intent reporting functions include functions that create and send intent reports to the intent owner according to expectations set by the intent owner in the original intent request. In some embodiments, intent functions send intent reports (also referred to as proposals) at core points in the intent lifecycle (e.g., acceptance, modification, or violation of an intent). In some embodiments, the intent owner sends reporting expectations in an intent request. For example, intent request 225 includes a proposing time parameter indicating a point in time when the intent handler (e.g., intent management component 210) should send proposal 265. For example, intent request 225 includes a parameter indicating to send proposal 265 in five seconds. **In** some embodiments, intent request 225 includes a proposing frequency parameter indicating a time duration when the intent handler (e.g., intent management component 210) should send proposal 265. For example, intent request 225 includes a parameter indicating to send proposal 265 every five seconds.

In one exemplary embodiment, as shown in Figure 3, intent request 225 includes expectations 315 and parameters 320 including a maximum proposal time parameter 325 indicating an upper bound on when the intent handler should send proposal 265. For example, intent request 225 includes maximum proposal time parameter 325 indicating to send proposal 265 no later than five seconds. Maximum proposal time parameter 325 allows intent handler 214 to determine when to send proposal 265 within the time range specified by maximum proposal time parameter 325, rather than sending proposal 265 at specific times. This prevents proposal flooding of intent owner 205 from multiple intent handlers. For example, a single intent owner may send intent requests to multiple intent handlers which all report back at the same time causing inefficiency in proposal processing. Using a maximum proposal time parameter, such as maximum proposal time parameter 325 allows intent handlers to send proposals to intent owners at varying times within the maximum proposal time period reducing the harms of proposal flooding. **In** some embodiments, intent handler 214 determines a proposal send time to send proposal 265 within the maximum proposal time parameter 325 based on a priority associated with intent request 225. In some embodiments, the priority is included in expectations 315 of intent request 225. For example, intent owner 205 sends intent request 225 with expectations 315 indicating that intent request 225 has a low priority. Intent handler 214 therefore sends proposal 265 in response to intent request 225 later than proposals for intent requests with higher priority. In some embodiments, intent handler 214 determines a priority for intent request 225. For example, intent handler 214 uses context knowledge (such as inference data) to determine the priority of intent request 225. In some embodiments, intent handler 214 determines the priority of intent request 225 based on a managing entity of intent owner 205. For example, intent handler 214 prioritizes (e.g., assigns a higher priority to) intent requests from the same managing entity as intent handler 214 and assigns a lower priority to intent requests from different managing entities. Intent requests for probe intent functions and best intent function may include a maximum proposal time parameter.

In some embodiments, intent handler 214 estimates a proposal time for intent request 225. For example, intent handler 214 uses inference data (such as inference data 150 of Figure 1) to estimate an amount of time it will take to process intent request 225 and generate proposal 265. Intent handler 214 does not send proposal 265 if the proposal time is greater than the maximum proposal time of intent request 225. In some embodiments the proposal time is the sum of the time intent request 225 is received and an estimated amount time for proposal generation. For example, the maximum proposal time of intent request 225 is t+5 seconds, and the estimated amount of time for proposal generation is 2 seconds. Intent handler 214 determines whether the sum of the time intent request is received and the estimated amount of time for proposal generation is less than or equal to the maximum proposal time. For example, if the time the intent request is received is t+2 second and the estimated amount of time for proposal generation is greater than 3 seconds, intent handler 214 cannot send proposal 265 in the time limit defined by the maximum proposal time (e.g., t+5 seconds). In some embodiments, intent handler 214 uses a current time instead of the time the intent request was received. In some embodiments, intent request 225 includes a time when the intent request is sent. In some embodiments intent handler 214 determines the time intent request 225 is sent.

In another exemplary embodiment, as shown in Figure 3, parameters 320 of intent request 225 includes minimum accuracy level parameter 330 indicating the minimum acceptable accuracy level for a proposal 265. For example, as explained above, target 220 of Figure 2 may be a network element, such as network element 140 which includes site intelligence, such as site intelligence 441 or 446 of Figure 4. As shown in Figure 2, control loop management component 215 evaluates actions 250 for target 220 which causes target 220 to perform site inference (e.g., site inference 162). In some embodiments, control loop management component 215 determines feedback 260 by causing target 220 to use site inference including a trained machine learning model executed on actions translated from expectations in intent request 225, such as expectations 315. For example, target 220 uses quality of experience parameters (e.g., expectations 315 of intent request 225 of Figure 3) as input features to a trained machine learning model which outputs an estimated safety score. In some embodiments, the output of trained machine learning model is associated with an accuracy level report parameter 340. In some embodiments, control loop management component 215 generates proposal 265 using the accuracy level report parameter 340 based on model accuracy levels (e.g., model uncertainty) for the relevant machine learning model. For example, control loop management component 215 includes the accuracy level report parameter 340 in proposal 265. Control loop management component 215 determines feedback 260 based on whether the accuracy level associated with the machine learning model output satisfies the minimum accuracy level parameter 330 specified by intent owner 205 in intent request 225. In some embodiments, target 220 knows the accuracy level of machine learning models included in its site inference and determines a maximum proposal accuracy level indicating the highest accuracy level of all machine learning model accuracy levels. In such a situation, target 220 responds with negative feedback 255 when the maximum proposal accuracy level of the machine learning model does not satisfy the minimum accuracy level parameter 330 specified by intent owner 205 in intent request 225 (e.g., target 220 sends a nok response). Likewise, target 220 responds with positive feedback 255 when the maximum proposal accuracy level of the machine learning model does satisfy the minimum accuracy level parameter specified by intent owner 205 in intent request 225 (e.g., target 220 sends an ok response).

As shown in Figure 3, intent handler 214 may be implemented on a first electronic device 310 and intent owner 105 may be implemented on a second electronic device 305. Intent request 225 and proposal 265 may therefore be messages sent between first electronic device 310 and second electronic device 305. Further details with regard to the operations of first electronic device 310 and second electronic device 305 are described with reference to Figure 4.

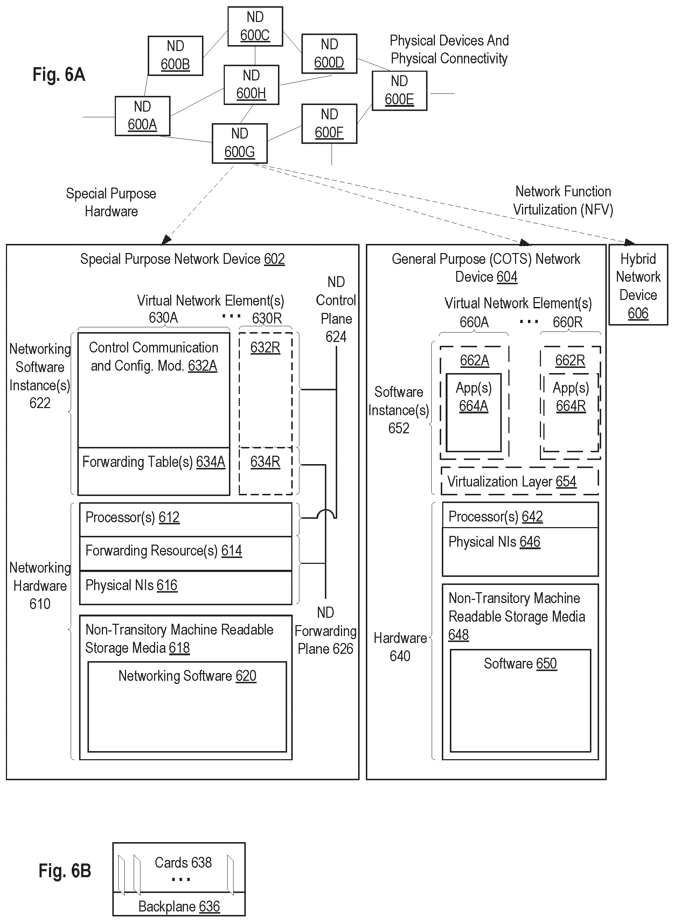

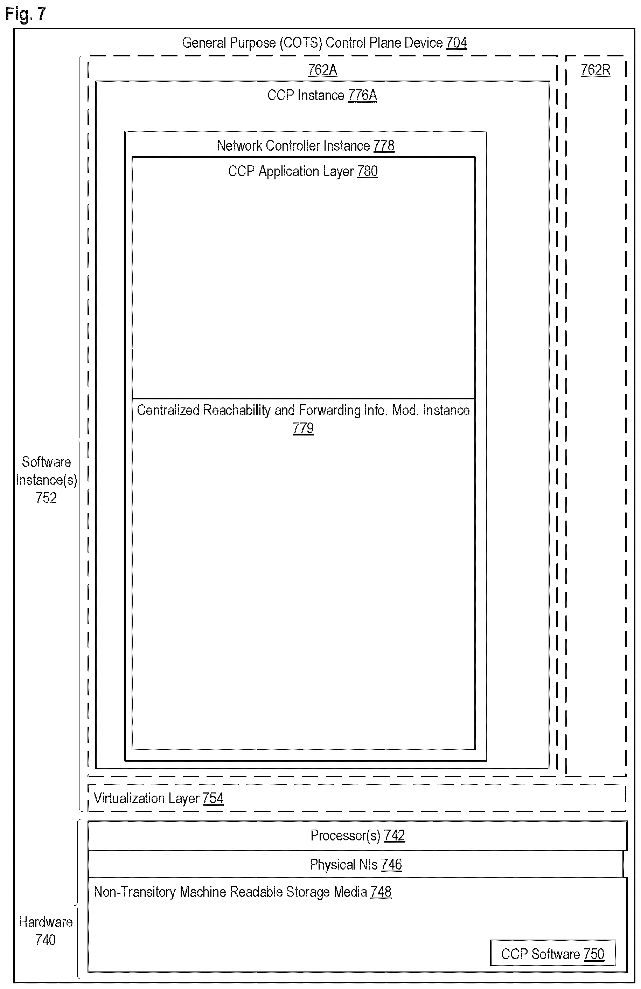

Figure 4 illustrates an exemplary network architecture 400 with intent management component, according to some embodiments of the invention. As shown in Figure 4, exemplary network architecture 400 may include intent owner 105, business operations 110, service operations 115, network intelligence component 420, resource operations 125 and network elements 140 and 445. Business operations 110, service operations 115, network intelligence component 420, and resource operations 125 are implemented on one or more general purpose control plane devices, such as later described with reference to general purpose control plane device 704 of Figure 7. Such general-purpose control plane devices may therefore implement one or both of first electronic device 310 and second electronic device 305. Network elements 140 and 445 may be physical or virtual network elements, such as later described with reference to virtual network elements 630A or 660A of Figure 6A. In some embodiments, one or more of business operations 110, service operations 115, network intelligence component 420, and resource operations 125 are included in the same general purpose control plane device. In some embodiments, site inference includes other artificial intelligence techniques such as reasoning inference and/or machine reasoning.

Intent functions (e.g., intent request 225 and proposal 265 of Figures 3 and 4) may occur at multiple levels of exemplary network architecture 400. For example, intent management component 111 is the intent owner and intent management component 116 is the intent handler in one intent interaction. In another example, intent management component 116 is the intent owner and intent management component 126 is the intent handler. In still another embodiment, intent management component 126 is the intent owner and intent management 431 is the intent handler. The interactions explained in Figures 2, 3, and 4 (including intent requests and proposals) can therefore occur between and among different devices within exemplary network architecture 400.

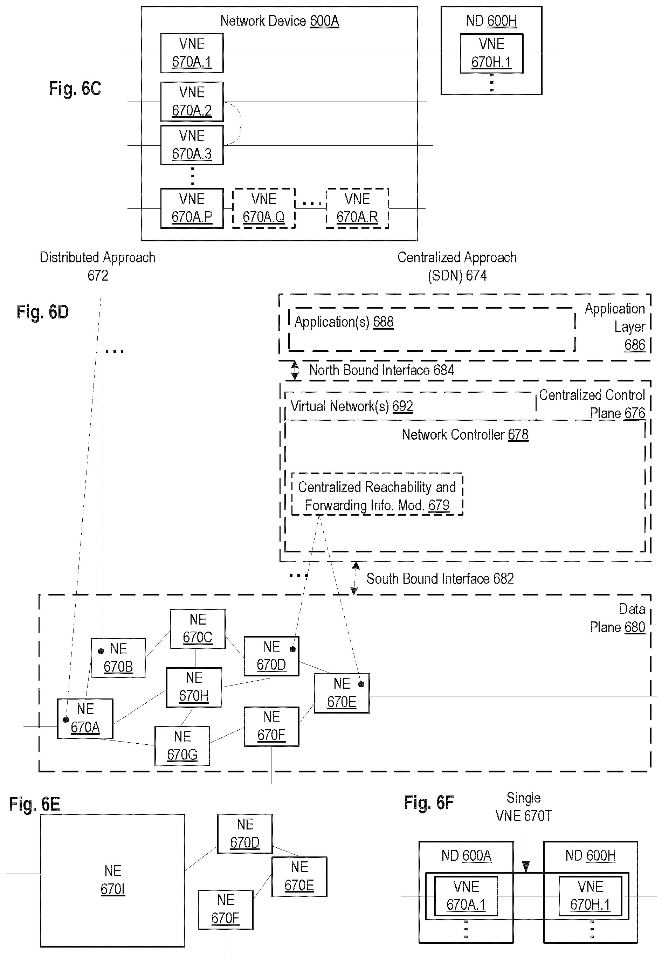

In some embodiments, exemplary network architecture 400 also includes autonomous domains, such as autonomous domains 450 and 455. Although only two autonomous domains, 450 and 455, are illustrated, any number of autonomous domains may be implemented. Additionally, although illustrated only at the resource operational layer, autonomous domains may exist at any operational layer and may even span multiple operational layers. For example, an autonomous domain may include business operations 110 and service operations 115. In some embodiments, autonomous domains are organized in a layered, peering, or orthogonal way to promote virtualization of an autonomous network over the physical infrastructure. For example, network elements can concurrently belong to different autonomous domains. In some embodiments, autonomous domains 450 and 455 are determined by a virtualization layer, such as virtualization layer 654 of Figure 6. In some embodiments, autonomous domains 450 and 455 are self-governing virtual network elements including self-X capabilities, such as self-optimization, self-healing, and self-protection. For example, control loop management component 127 and/or control loop management component 432 of autonomous domain 450 and/or 455 enables and executes self-X capabilities for autonomous domain 450.

Business operations 110 includes intent management component 111, control loop management component 112, and local intelligence component 113. In some embodiments intent management component 112 implements external intent application program interface (API) interactions between components in an autonomous network. For example, exemplary network architecture 400 is an autonomous network operating using an intent-driven interface enabling interactions between intent owners and intent handlers for intent stages include setting intent, reporting on intent, negotiating intent, and profile handling. For example, an intent is a formal specification of expectations including requirements, goals, and constraints for a system, such as exemplary network architecture 400. An intent can be specific to an operational layer (such as service operations 115) or may be more broadly applied to multiple operational layers (such as business operation 110 and service operation 115). Intent-driven interfaces include an intent owner (e.g., intent owner 105) which sets the intent (i.e., requirements, goals, and constraints) and an intent handler which receives the intent and determines whether it has resources to fulfill the intent. In some embodiments, intent management component 111 can act as both intent handler and intent owner. For example, intent management component 111 can both receive and reply to an intent from intent owner 105 and send an intent to an intent handler, such as intent management component 116.

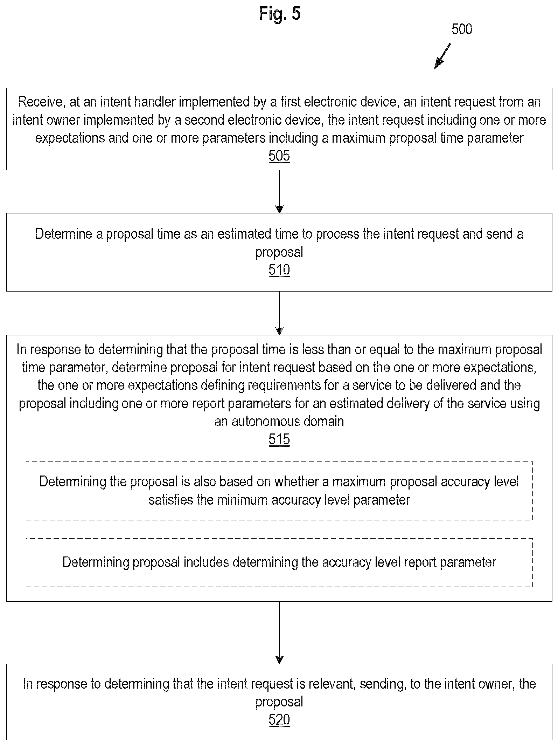

Figure 5 is a flow diagram of an example method to generate proposals using a maximum proposal time. The operations in the flow diagram will be described with reference to the exemplary embodiments of the other figures. However, it should be understood that the operations of the flow diagram can be performed by embodiments of the invention other than those discussed with reference to the other figures, and the embodiments of the invention discussed with reference to these other figures can perform operations different than those discussed with reference to the flow diagram. Method 500 may be implemented by one or more of intent management component 210, control loop management component 215, and target 220 of Figure 2.

At operation 505, the processing device receives, at an intent handler implemented by a first electronic device (e.g., first electronic device 310) an intent request from an intent owner implemented by a second electronic device (e.g., second electronic device 305). The intent request includes expectations and parameters including a maximum proposal time parameter. For example, intent management component 210 receives intent request 225 including a maximum proposal time parameter (e.g., maximum proposal time parameter 325) from intent owner 205. In some embodiments intent request 225 is a best intent function. In other embodiments, intent request 225 is a probe intent function. Further details with regard to the operations of receiving and processing an intent request are explained with reference to Figures 2, 3, and 4.

At operation 510, the processing device determines a proposal time as an estimated time to process the intent request and send a proposal. For example, intent handler 214 estimates a proposal time for intent request 225 using inference data (such as inference data 150 of Figure 1) to estimate how long it will take to process intent request 225 and generate proposal 265. In some embodiments, the processing device does not send the proposal if the proposal time is greater than the maximum proposal time of the intent request. In some embodiments, the processing device determines the estimated proposal time using a time the intent request is received and an estimated amount of time for proposal generation. For example, the maximum proposal time of intent request 225 is t+5 seconds, and intent request 225 was received at t+2 seconds. If the estimated amount of time for proposal generation is greater than 3 seconds, the proposal time is greater than t+5 seconds and intent handler 214 cannot send proposal 265 in the time limit defined by the maximum proposal time. Further details with regard to the operations of determining whether the intent request is relevant are explained with reference to Figures 2, 3, and 4.

At operation 515, in response to determining that the intent request is relevant, the processing device determines the proposal for the intent request based on the expectations, the expectations defining requirements for a service to be delivered and the proposal including one or more report parameters, such as report parameters 335 of Figure 3, for an estimated delivery of the service using an autonomous domain. For example, intent handler 214 determines that it can respond with proposal 265 before the maximum proposal time of intent request 225. The processing device translates the expectations of the intent request into actions. For example, intent handler 214 uses the knowledge from an intelligence component (e.g., local intelligence components 113 and 118 or domain intelligence components 128 and 433 of Figure 4) into a handle intent directive 240 (e.g., handle intent directive 152 of Figure 1) sent to a control loop management component 215. Control loop management component 215 evaluates actions 250 of translated intent request 225 for target 220. For example, control loop management component 215 executes an action, such as action 160 of Figure 1 on target 220. In some embodiments, target 220 responds with feedback 255 indicating whether target 220 includes the resources necessary to perform the action. If target 220 includes the resources necessary, control loop management component 215 determines feedback 260 including the best value for the outcome (e.g., best security score that can be achieved) and sends feedback 260 to intent handler 214. In some embodiments, the processing device determines the proposal based on whether a maximum proposal accuracy level satisfies the minimum accuracy level parameter (e.g., minimum accuracy level parameter 340 of Figure 3). For example, intent handler 214 determines whether any accuracy level of a target or combination of targets (e.g., target 220) satisfies the minimum accuracy level parameter. Further details with regard to the operations of determining the proposal are explained with reference to Figures 2, 3, and 4.

At operation 520, in response to determining that the intent request is relevant, the processing device sends the determined proposal to the intent owner. For example, intent handler 214 uses feedback 260 to generate proposal 265 which is sent as a propose intent function through message queue 212 as notification 270 to intent owner 205. Further details with regard to the operations of sending the determined proposal are explained with reference to Figures 2, 3, and 4.

An electronic device stores and transmits (internally and/or with other electronic devices over a network, such as autonomous network 400) code (which is composed of software instructions and which is sometimes referred to as computer program code or a computer program) and/or data using machine-readable media (also called computer-readable media or a memory unit), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device, such as first electronic device 310 and/or second electronic device 305, (e.g., a computer) includes hardware and software, such as a set of one or more processors (e.g., wherein a processor is a microprocessor, controller, microcontroller, central processing unit, digital signal processor, application specific integrated circuit, field programmable gate array, other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set of one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some embodiments, a physical NI may comprise radio circuitry capable of receiving data from other electronic devices over a wireless connection and/or sending data out to other devices via a wireless connection. This radio circuitry may include transmitter(s), receiver(s), and/or transceiver(s) suitable for radiofrequency communication. The radio circuitry may convert digital data into a radio signal having the appropriate parameters (e.g., frequency, timing, channel, bandwidth, etc.). The radio signal may then be transmitted via antennas to the appropriate recipient(s). In some embodiments, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate via wire through plugging in a cable to a physical port connected to a NIC. One or more parts of an embodiment of the invention may be implemented using different combinations of software, firmware, and/or hardware.

A network device (ND) is an electronic device (e.g., first electronic device 310 or second electronic device 305) that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

Figure 6A illustrates connectivity between network devices (NDs) within an exemplary network, such as autonomous network 400 as well as three exemplary implementations of the NDs, according to some embodiments of the invention. Figure 6A shows NDs 600A-H, and their connectivity by way of lines between 600A-600B, 600B-600C, 600C-600D, 600D-600E, 600E-600F, 600F-600G, and 600A-600G, as well as between 600H and each of 600A, 600C, 600D, and 600G. These NDs are physical devices, and the connectivity between these NDs can be wireless or wired (often referred to as a link). An additional line extending from NDs 600A, 600E, and 600F illustrates that these NDs act as ingress and egress points for the network (and thus, these NDs are sometimes referred to as edge NDs, while the other NDs may be called core NDs).

Two of the exemplary ND implementations in Figure 6A are: 1) a special-purpose network device 602 that uses custom application-specific integrated-circuits (ASICs) and a special-purpose operating system (OS); and 2) a general-purpose network device 604 that uses common off-the-shelf (COTS) processors and a standard OS.

The special-purpose network device 602 includes networking hardware 610 comprising a set of one or more processor(s) 612, forwarding resource(s) 614 (which typically include one or more ASICs and/or network processors), and physical network interfaces (NIs) 616 (through which network connections are made, such as those shown by the connectivity between NDs 600A-H), as well as non-transitory machine-readable storage media 618 having stored therein networking software 620. During operation, the networking software 620 may be executed by the networking hardware 610 to instantiate a set of one or more networking software instance(s) 622. Each of the networking software instance(s) 622, and that part of the networking hardware 610 that executes that network software instance (be it hardware dedicated to that networking software instance and/or time slices of hardware temporally shared by that networking software instance with others of the networking software instance(s) 622), form a separate virtual network element 630A-R. Each of the virtual network element(s) (VNEs) 630A-R includes a control communication and configuration module 632A-R (sometimes referred to as a local control module or control communication module) and forwarding table(s) 634A-R, such that a given virtual network element (e.g., 630A) includes the control communication and configuration module (e.g., 632A), a set of one or more forwarding table(s) (e.g., 634A), and that portion of the networking hardware 610 that executes the virtual network element (e.g., 630A, 140, or 445). In some embodiments, each of the operational layers of Figure 4 are implemented in separate virtual network elements (e.g., virtual network elements 630A-630R).

The special-purpose network device 602 is often physically and/or logically considered to include: 1) a ND control plane 624 (sometimes referred to as a control plane) comprising the processor(s) 612 that execute the control communication and configuration module(s) 632A-R; and 2) a ND forwarding plane 626 (sometimes referred to as a forwarding plane, a data plane, or a media plane) comprising the forwarding resource(s) 614 that utilize the forwarding table(s) 634A-R and the physical Nis 616. By way of example, where the ND is a router (or is implementing routing functionality), the ND control plane 624 (the processor(s) 612 executing the control communication and configuration module(s) 632A-R) is typically responsible for participating in controlling how data (e.g., packets) is to be routed (e.g., the next hop for the data and the outgoing physical NI for that data) and storing that routing information in the forwarding table(s) 634A-R, and the ND forwarding plane 626 is responsible for receiving that data on the physical Nis 616 and forwarding that data out the appropriate ones of the physical NIs 616 based on the forwarding table(s) 634A-R.

Figure 6B illustrates an exemplary way to implement the special-purpose network device 602 according to some embodiments of the invention. Figure 6B shows a special-purpose network device including cards 638 (typically hot pluggable). While in some embodiments the cards 638 are of two types (one or more that operate as the ND forwarding plane 626 (sometimes called line cards), and one or more that operate to implement the ND control plane 624 (sometimes called control cards)), alternative embodiments may combine functionality onto a single card and/or include additional card types (e.g., one additional type of card is called a service card, resource card, or multi-application card). A service card can provide specialized processing (e.g., for service operations 115 and/or Layer 4 to Layer 7 services (e.g., firewall, Internet Protocol Security (IPsec), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 636 (e.g., a first full mesh coupling the line cards and a second full mesh coupling all of the cards).

Returning to Figure 6A, the general-purpose network device 604 includes hardware 640 comprising a set of one or more processor(s) 642 (which are often COTS processors) and physical NIs 646, as well as non-transitory machine-readable storage media 648 having stored therein software 650. During operation, the processor(s) 642 execute the software 650 to instantiate one or more sets of one or more applications 664A-R. In some embodiments, the one or more applications 664A-R are associated with the delivery of a service. While one embodiment does not implement virtualization, alternative embodiments may use different forms of virtualization. For example, in one such alternative embodiment the virtualization layer 654 represents the kernel of an operating system (or a shim executing on a base operating system) that allows for the creation of multiple instances 662A-R called software containers that may each be used to execute one (or more) of the sets of applications 664A-R; where the multiple software containers (also called virtualization engines, virtual private servers, or jails) are user spaces (typically a virtual memory space) that are separate from each other and separate from the kernel space in which the operating system is run; and where the set of applications running in a given user space, unless explicitly allowed, cannot access the memory of the other processes. In another such alternative embodiment the virtualization layer 654 represents a hypervisor (sometimes referred to as a virtual machine monitor (VMM)) or a hypervisor executing on top of a host operating system, and each of the sets of applications 664A-R is run on top of a guest operating system within an instance 662A-R called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In yet other alternative embodiments, one, some or all of the applications are implemented as unikemel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 640, directly on a hypervisor (in which case the unikernel is sometimes described as running within a LibOS virtual machine), or in a software container, embodiments can be implemented fully with unikernels running directly on a hypervisor represented by virtualization layer 654, unikernels running within software containers represented by instances 662A-R, or as a combination of unikernels and the above-described techniques (e.g., unikernels and virtual machines both run directly on a hypervisor, unikernels and sets of applications that are run in different software containers).

The instantiation of the one or more sets of one or more applications 664A-R, as well as virtualization if implemented, are collectively referred to as software instance(s) 652. Each set of applications 664A-R, corresponding virtualization construct (e.g., instance 662A-R) if implemented, and that part of the hardware 640 that executes them (be it hardware dedicated to that execution and/or time slices of hardware temporally shared), forms a separate virtual network element(s) 660A-R (e.g., network elements 140 and 445).

The virtual network element(s) 660A-R perform similar functionality to the virtual network element(s) 630A-R - e.g., similar to the control communication and configuration module(s) 632A and forwarding table(s) 634A (this virtualization of the hardware 640 is sometimes referred to as network function virtualization (NFV)). Thus, NFV may be used to consolidate many network equipment types onto industry standard high volume server hardware, physical switches, and physical storage, which could be located in Data centers, NDs, and customer premise equipment (CPE). While embodiments of the invention are illustrated with each instance 662A-R corresponding to one VNE 660A-R, alternative embodiments may implement this correspondence at a finer level granularity (e.g., line card virtual machines virtualize line cards, control card virtual machine virtualize control cards, etc.); it should be understood that the techniques described herein with reference to a correspondence of instances 662A-R to VNEs also apply to embodiments where such a finer level of granularity and/or unikernels are used.

In certain embodiments, the virtualization layer 654 includes a virtual switch that provides similar forwarding services as a physical Ethernet switch. Specifically, this virtual switch forwards traffic between instances 662A-R and the physical NI(s) 646, as well as optionally between the instances 662A-R; in addition, this virtual switch may enforce network isolation between the VNEs 660A-R that by policy are not permitted to communicate with each other (e.g., by honoring virtual local area networks (VLANs)).

The third exemplary ND implementation in Figure 6A is a hybrid network device 606, which includes both custom ASICs/special-purpose OS and COTS processors/standard OS in a single ND or a single card within an ND. In certain embodiments of such a hybrid network device, a platform VM (i.e., a VM that that implements the functionality of the special-purpose network device 602) could provide for para-virtualization to the networking hardware present in the hybrid network device 606.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE (e.g., network elements 140 and 445). Also, in all of the above exemplary implementations, each of the VNEs (e.g., VNE(s) 630A-R, VNEs 660A-R, and those in the hybrid network device 606) receives data on the physical NIs (e.g., 616, 646) and forwards that data out the appropriate ones of the physical NIs (e.g., 616, 646). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP), Transmission Control Protocol (TCP), and differentiated services code point (DSCP) values.

Figure 6C illustrates various exemplary ways in which VNEs may be coupled according to some embodiments of the invention. Figure 6C shows VNEs 670A.1-670A.P (and optionally VNEs 670A.Q-670A.R) implemented in ND 600A and VNE 670H.1 in ND 600H. In Figure 6C, VNEs 670A.1-P are separate from each other in the sense that they can receive packets from outside ND 600A and forward packets outside of ND 600A; VNE 670A.1 is coupled with VNE 670H.1, and thus they communicate packets between their respective NDs; VNE 670A.2-670A.3 may optionally forward packets between themselves without forwarding them outside of the ND 600A; and VNE 670A.P may optionally be the first in a chain of VNEs that includes VNE 670A.Q followed by VNE 670A.R (this is sometimes referred to as dynamic service chaining, where each of the VNEs in the series of VNEs provides a different service - e.g., one or more layer 4-7 network services). While Figure 6C illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure 6A, for example, may form part of the Internet or a private network; and other electronic devices (not shown; such as end user devices including workstations, laptops, netbooks, tablets, palm tops, mobile phones, smartphones, phablets, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in Figure 6A may also host one or more such servers (e.g., in the case of the general purpose network device 604, one or more of the software instances 662A-R may operate as servers; the same would be true for the hybrid network device 606; in the case of the special-purpose network device 602, one or more such servers could also be run on a virtualization layer executed by the processor(s) 612); in which case the servers are said to be co-located with the VNEs of that ND.

A virtual network is a logical abstraction of a physical network (such as that in Figure 6A) that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethemet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

Fig. 6D illustrates a network with a single network element on each of the NDs of Figure 6A, and within this straightforward approach contrasts a traditional distributed approach (commonly used by traditional routers) with a centralized approach for maintaining reachability and forwarding information (also called network control), according to some embodiments of the invention. Specifically, Figure 6D illustrates network elements (NEs) 670A-H with the same connectivity as the NDs 600A-H of Figure 6A.

Figure 6D illustrates that the distributed approach 672 distributes responsibility for generating the reachability and forwarding information across the NEs 670A-H; in other words, the process of neighbor discovery and topology discovery is distributed.

For example, where the special-purpose network device 602 is used, the control communication and configuration module(s) 632A-R of the ND control plane 624 typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs 670A-H (e.g., the processor(s) 612 executing the control communication and configuration module(s) 632A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 624. The ND control plane 624 programs the ND forwarding plane 626 with information (e.g., adjacency and route information) based on the routing structure(s). For example, the ND control plane 624 programs the adjacency and route information into one or more forwarding table(s) 634A-R (e.g., Forwarding Information Base (FIB), Label Forwarding Information Base (LFIB), and one or more adjacency structures) on the ND forwarding plane 626. For layer 2 forwarding, the ND can store one or more bridging tables that are used to forward data based on the layer 2 information in that data. While the above example uses the special-purpose network device 602, the same distributed approach 672 can be implemented on the general-purpose network device 604 and the hybrid network device 606.

Figure 6D illustrates that a centralized approach 674 (also known as software defined networking (SDN)) that decouples the system that makes decisions about where traffic is sent from the underlying systems that forwards traffic to the selected destination. The illustrated centralized approach 674 has the responsibility for the generation of reachability and forwarding information in a centralized control plane 676 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 676 has a south bound interface 682 with a data plane 680 (sometime referred to the infrastructure layer, network forwarding plane, or forwarding plane (which should not be confused with a ND forwarding plane)) that includes the NEs 670A-H (sometimes referred to as switches, forwarding elements, data plane elements, or nodes). The centralized control plane 676 includes a network controller 678, which includes a centralized reachability and forwarding information module 679 that determines the reachability within the network and distributes the forwarding information to the NEs 670A-H of the data plane 680 over the south bound interface 682 (which may use the OpenFlow protocol). Thus, the network intelligence is centralized in the centralized control plane 676 executing on electronic devices that are typically separate from the NDs.

For example, where the special-purpose network device 602 is used in the data plane 680, each of the control communication and configuration module(s) 632A-R of the ND control plane 624 typically include a control agent that provides the VNE side of the south bound interface 682. In this case, the ND control plane 624 (the processor(s) 612 executing the control communication and configuration module(s) 632A-R) performs its responsibility for participating in controlling how data (e.g., packets) is to be routed (e.g., the next hop for the data and the outgoing physical NI for that data) through the control agent communicating with the centralized control plane 676 to receive the forwarding information (and in some cases, the reachability information) from the centralized reachability and forwarding information module 679 (it should be understood that in some embodiments of the invention, the control communication and configuration module(s) 632A-R, in addition to communicating with the centralized control plane 676, may also play some role in determining reachability and/or calculating forwarding information - albeit less so than in the case of a distributed approach; such embodiments are generally considered to fall under the centralized approach 674, but may also be considered a hybrid approach).

While the above example uses the special-purpose network device 602, the same centralized approach 674 can be implemented with the general purpose network device 604 (e.g., each of the VNE 660A-R performs its responsibility for controlling how data (e.g., packets) is to be routed (e.g., the next hop for the data and the outgoing physical NI for that data) by communicating with the centralized control plane 676 to receive the forwarding information (and in some cases, the reachability information) from the centralized reachability and forwarding information module 679; it should be understood that in some embodiments of the invention, the VNEs 660A-R, in addition to communicating with the centralized control plane 676, may also play some role in determining reachability and/or calculating forwarding information - albeit less so than in the case of a distributed approach) and the hybrid network device 606. In fact, the use of SDN techniques can enhance the NFV techniques typically used in the general-purpose network device 604 or hybrid network device 606 implementations as NFV is able to support SDN by providing an infrastructure upon which the SDN software can be run, and NFV and SDN both aim to make use of commodity server hardware and physical switches.

Figure 6D also shows that the centralized control plane 676 has a north bound interface 684 to an application layer 686, in which resides application(s) 688. The centralized control plane 676 has the ability to form virtual networks 692 (sometimes referred to as a logical forwarding plane, network services, or overlay networks (with the NEs 670A-H of the data plane 680 being the underlay network)) for the application(s) 688. Thus, the centralized control plane 676 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While Figure 6D shows the distributed approach 672 separate from the centralized approach 674, the effort of network control may be distributed differently or the two combined in certain embodiments of the invention. For example: 1) embodiments may generally use the centralized approach (SDN) 674, but have certain functions delegated to the NEs (e.g., the distributed approach may be used to implement one or more of fault monitoring, performance monitoring, protection switching, and primitives for neighbor and/or topology discovery); or 2) embodiments of the invention may perform neighbor discovery and topology discovery via both the centralized control plane and the distributed protocols, and the results compared to raise exceptions where they do not agree. Such embodiments are generally considered to fall under the centralized approach 674 but may also be considered a hybrid approach.

While Figure 6D illustrates the simple case where each of the NDs 600A-H implements a single NE 670A-H, it should be understood that the network control approaches described with reference to Figure 6D also work for networks where one or more of the NDs 600A-H implement multiple VNEs (e.g., VNEs 630A-R, VNEs 660A-R, those in the hybrid network device 606). Alternatively, or in addition, the network controller 678 may also emulate the implementation of multiple VNEs in a single ND. Specifically, instead of (or in addition to) implementing multiple VNEs in a single ND, the network controller 678 may present the implementation of a VNE/NE in a single ND as multiple VNEs in the virtual networks 692 (all in the same one of the virtual network(s) 692, each in different ones of the virtual network(s) 692, or some combination). For example, the network controller 678 may cause an ND to implement a single VNE (a NE) in the underlay network, and then logically divide up the resources of that NE within the centralized control plane 676 to present different VNEs in the virtual network(s) 692 (where these different VNEs in the overlay networks are sharing the resources of the single VNE/NE implementation on the ND in the underlay network).

On the other hand, Figures 6E and 6F respectively illustrate exemplary abstractions of NEs and VNEs that the network controller 678 may present as part of different ones of the virtual networks 692. Figure 6E illustrates the simple case of where each of the NDs 600A-H implements a single NE 670A-H (see Figure 6D), but the centralized control plane 676 has abstracted multiple of the NEs in different NDs (the NEs 670A-C and G-H) into (to represent) a single NE 670I in one of the virtual network(s) 692 of Figure 6D, according to some embodiments of the invention. Figure 6E shows that in this virtual network, the NE 670I is coupled to NE 670D and 670F, which are both still coupled to NE 670E.

Figure 6F illustrates a case where multiple VNEs (VNE 670A.1 and VNE 670H.1) are implemented on different NDs (ND 600A and ND 600H) and are coupled to each other, and where the centralized control plane 676 has abstracted these multiple VNEs such that they appear as a single VNE 670T within one of the virtual networks 692 of Figure 6D, according to some embodiments of the invention. Thus, the abstraction of a NE or VNE can span multiple NDs.

While some embodiments of the invention implement the centralized control plane 676 as a single entity (e.g., a single instance of software running on a single electronic device), alternative embodiments may spread the functionality across multiple entities for redundancy and/or scalability purposes (e.g., multiple instances of software running on different electronic devices).

Similar to the network device implementations, the electronic device(s) running the centralized control plane 676, and thus the network controller 678 including the centralized reachability and forwarding information module 679, may be implemented a variety of ways (e.g., a special purpose device, a general-purpose (e.g., COTS) device, or hybrid device). These electronic device(s) would similarly include processor(s), a set of one or more physical NIs, and a non-transitory machine-readable storage medium having stored thereon the centralized control plane software. For instance, Figure 7 illustrates, a general-purpose control plane device 704 including hardware 740 comprising a set of one or more processor(s) 742 (which are often COTS processors) and physical NIs 746, as well as non-transitory machine-readable storage media 748 having stored therein centralized control plane (CCP) software 750.

In embodiments that use compute virtualization, the processor(s) 742 typically execute software to instantiate a virtualization layer 754 (e.g., in one embodiment the virtualization layer 754 represents the kernel of an operating system (or a shim executing on a base operating system) that allows for the creation of multiple instances 762A-R called software containers (representing separate user spaces and also called virtualization engines, virtual private servers, or jails) that may each be used to execute a set of one or more applications; in another embodiment the virtualization layer 754 represents a hypervisor (sometimes referred to as a virtual machine monitor (VMM)) or a hypervisor executing on top of a host operating system, and an application is run on top of a guest operating system within an instance 762A-R called a virtual machine (which in some cases may be considered a tightly isolated form of software container) that is run by the hypervisor ; in another embodiment, an application is implemented as a unikernel, which can be generated by compiling directly with an application only a limited set of libraries (e.g., from a library operating system (LibOS) including drivers/libraries of OS services) that provide the particular OS services needed by the application, and the unikernel can run directly on hardware 740, directly on a hypervisor represented by virtualization layer 754 (in which case the unikernel is sometimes described as running within a LibOS virtual machine), or in a software container represented by one of instances 762A-R). Again, in embodiments where compute virtualization is used, during operation an instance of the CCP software 750 (illustrated as CCP instance 776A) is executed (e.g., within the instance 762A) on the virtualization layer 754. In embodiments where compute virtualization is not used, the CCP instance 776A is executed, as a unikernel or on top of a host operating system, on the "bare metal" general purpose control plane device 704. The instantiation of the CCP instance 776A, as well as the virtualization layer 754 and instances 762A-R if implemented, are collectively referred to as software instance(s) 752.

**In** some embodiments, the CCP instance 776A includes a network controller instance 778. The network controller instance 778 includes a centralized reachability and forwarding information module instance 779 (which is a middleware layer providing the context of the network controller 678 to the operating system and communicating with the various NEs), and an CCP application layer 780 (sometimes referred to as an application layer) over the middleware layer (providing the intelligence required for various network operations such as protocols, network situational awareness, and user - interfaces). At a more abstract level, this CCP application layer 780 within the centralized control plane 676 works with virtual network view(s) (logical view(s) of the network) and the middleware layer provides the conversion from the virtual networks to the physical view.

The centralized control plane 676 transmits relevant messages to the data plane 680 based on CCP application layer 780 calculations and middleware layer mapping for each flow. A flow may be defined as a set of packets whose headers match a given pattern of bits; in this sense, traditional IP forwarding is also flow-based forwarding where the flows are defined by the destination IP address for example, however, in other implementations, the given pattern of bits used for a flow definition may include more fields (e.g., 10 or more) in the packet headers. Different NDs/NEs/VNEs of the data plane 680 may receive different messages, and thus different forwarding information. The data plane 680 processes these messages and programs the appropriate flow information and corresponding actions in the forwarding tables (sometime referred to as flow tables) of the appropriate NE/VNEs, and then the NEs/VNEs map incoming packets to flows represented in the forwarding tables and forward packets based on the matches in the forwarding tables.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 680, the packet (or a subset of the packet header and content) is typically forwarded to the centralized control plane 676. The centralized control plane 676 will then program forwarding table entries into the data plane 680 to accommodate packets belonging to the flow of the unknown packet. Once a specific forwarding table entry has been programmed into the data plane 680 by the centralized control plane 676, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes, where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

Next hop selection by the routing system for a given destination may resolve to one path (that is, a routing protocol may generate one next hop on a shortest path); but if the routing system determines there are multiple viable next hops (that is, the routing protocol generated forwarding solution offers more than one next hop on a shortest path - multiple equal cost next hops), some additional criteria is used - for instance, in a connectionless network, Equal Cost Multi Path (ECMP) (also known as Equal Cost Multi Pathing, multipath forwarding and IP multipath) may be used (e.g., typical implementations use as the criteria particular header fields to ensure that the packets of a particular packet flow are always forwarded on the same next hop to preserve packet flow ordering). For purposes of multipath forwarding, a packet flow is defined as a set of packets that share an ordering constraint. As an example, the set of packets in a particular TCP transfer sequence need to arrive in order, else the TCP logic will interpret the out of order delivery as congestion and slow the TCP transfer rate down.

A Layer 3 (L3) Link Aggregation (LAG) link is a link directly connecting two NDs with multiple IP-addressed link paths (each link path is assigned a different IP address), and a load distribution decision across these different link paths is performed at the ND forwarding plane; in which case, a load distribution decision is made between the link paths.

Some NDs include functionality for authentication, authorization, and accounting (AAA) protocols (e.g., RADIUS (Remote Authentication Dial-In User Service), Diameter, and/or TACACS+ (Terminal Access Controller Access Control System Plus). AAA can be provided through a client/server model, where the AAA client is implemented on a ND and the AAA server can be implemented either locally on the ND or on a remote electronic device coupled with the ND. Authentication is the process of identifying and verifying a subscriber. For instance, a subscriber might be identified by a combination of a username and a password or through a unique key. Authorization determines what a subscriber can do after being authenticated, such as gaining access to certain electronic device information resources (e.g., through the use of access control policies). Accounting is recording user activity. By way of a summary example, end user devices may be coupled (e.g., through an access network) through an edge ND (supporting AAA processing) coupled to core NDs coupled to electronic devices implementing servers of service/content providers. AAA processing is performed to identify for a subscriber the subscriber record stored in the AAA server for that subscriber. A subscriber record includes a set of attributes (e.g., subscriber name, password, authentication information, access control information, rate-limiting information, policing information) used during processing of that subscriber's traffic.

Certain NDs (e.g., certain edge NDs) internally represent end user devices (or sometimes customer premise equipment (CPE) such as a residential gateway (e.g., a router, modem) using subscriber circuits. A subscriber circuit uniquely identifies within the ND a subscriber session and typically exists for the lifetime of the session. Thus, a ND typically allocates a subscriber circuit when the subscriber connects to that ND, and correspondingly de-allocates that subscriber circuit when that subscriber disconnects. Each subscriber session represents a distinguishable flow of packets communicated between the ND and an end user device (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for digital subscriber line (DSL) services and requires installation of a PPP client that enables the subscriber to enter a username and a password, which in turn may be used to select a subscriber record. When DHCP is used (e.g., for cable modem services), a username typically is not provided; but in such situations other information (e.g., information that includes the MAC address of the hardware in the end user device (or CPE)) is provided. The use of DHCP and CLIPS on the ND captures the MAC addresses and uses these addresses to distinguish subscribers and access their subscriber records.

A virtual circuit (VC), synonymous with virtual connection and virtual channel, is a connection-oriented communication service that is delivered by means of packet mode communication. Virtual circuit communication resembles circuit switching, since both are connection oriented, meaning that in both cases data is delivered in correct order, and signaling overhead is required during a connection establishment phase. Virtual circuits may exist at different layers. For example, at layer 4, a connection-oriented transport layer datalink protocol such as Transmission Control Protocol (TCP) may rely on a connectionless packet switching network layer protocol such as IP, where different packets may be routed over different paths, and thus be delivered out of order. Where a reliable virtual circuit is established with TCP on top of the underlying unreliable and connectionless IP protocol, the virtual circuit is identified by the source and destination network socket address pair, i.e., the sender and receiver IP address and port number. However, a virtual circuit is possible since TCP includes segment numbering and reordering on the receiver side to prevent out-of-order delivery. Virtual circuits are also possible at Layer 3 (network layer) and Layer 2 (datalink layer); such virtual circuit protocols are based on connection-oriented packet switching, meaning that data is always delivered along the same network path, i.e., through the same NEs/VNEs. In such protocols, the packets are not routed individually, and complete addressing information is not provided in the header of each data packet; only a small virtual channel identifier (VCI) is required in each packet; and routing information is transferred to the NEs/VNEs during the connection establishment phase; switching only involves looking up the virtual channel identifier in a table rather than analyzing a complete address. Examples of network layer and datalink layer virtual circuit protocols, where data always is delivered over the same path: X.25, where the VC is identified by a virtual channel identifier (VCI); Frame relay, where the VC is identified by a VCI; Asynchronous Transfer Mode (ATM), where the circuit is identified by a virtual path identifier (VPI) and virtual channel identifier (VCI) pair; General Packet Radio Service (GPRS); and Multiprotocol label switching (MPLS), which can be used for IP over virtual circuits (Each circuit is identified by a label).

Certain NDs (e.g., certain edge NDs) use a hierarchy of circuits. The leaf nodes of the hierarchy of circuits are subscriber circuits. The subscriber circuits have parent circuits in the hierarchy that typically represent aggregations of multiple subscriber circuits, and thus the network segments and elements used to provide access network connectivity of those end user devices to the ND. These parent circuits may represent physical or logical aggregations of subscriber circuits (e.g., a virtual local area network (VLAN), a permanent virtual circuit (PVC) (e.g., for Asynchronous Transfer Mode (ATM)), a circuit-group, a channel, a pseudo-wire, a physical NI of the ND, and a link aggregation group). A circuit-group is a virtual construct that allows various sets of circuits to be grouped together for configuration purposes, for example aggregate rate control. A pseudo-wire is an emulation of a layer 2 point-to-point connection-oriented service. A link aggregation group is a virtual construct that merges multiple physical NIs for purposes of bandwidth aggregation and redundancy. Thus, the parent circuits physically or logically encapsulate the subscriber circuits.

Each VNE (e.g., a virtual router, a virtual bridge (which may act as a virtual switch instance in a Virtual Private LAN Service (VPLS) is typically independently administrable. For example, in the case of multiple virtual routers, each of the virtual routers may share system resources but is separate from the other virtual routers regarding its management domain, AAA (authentication, authorization, and accounting) name space, IP address, and routing database(s). Multiple VNEs may be employed in an edge ND to provide direct network access and/or different classes of services for subscribers of service and/or content providers.

Within certain NDs, "interfaces" that are independent of physical NIs may be configured as part of the VNEs to provide higher-layer protocol and service information (e.g., Layer 3 addressing). The subscriber records in the AAA server identify, in addition to the other subscriber configuration requirements, to which context (e.g., which of the VNEs/NEs) the corresponding subscribers should be bound within the ND. As used herein, a binding forms an association between a physical entity (e.g., physical NI, channel) or a logical entity (e.g., circuit such as a subscriber circuit or logical circuit (a set of one or more subscriber circuits)) and a context's interface over which network protocols (e.g., routing protocols, bridging protocols) are configured for that context. Subscriber data flows on the physical entity when some higher-layer protocol interface is configured and associated with that physical entity.

Some NDs provide support for implementing VPNs (Virtual Private Networks) (e.g., Layer 2 VPNs and/or Layer 3 VPNs). For example, the ND where a provider's network and a customer's network are coupled are respectively referred to as PEs (Provider Edge) and CEs (Customer Edge). In a Layer 2 VPN, forwarding typically is performed on the CE(s) on either end of the VPN and traffic is sent across the network (e.g., through one or more PEs coupled by other NDs). Layer 2 circuits are configured between the CEs and PEs (e.g., an Ethernet port, an ATM permanent virtual circuit (PVC), a Frame Relay PVC). In a Layer 3 VPN, routing typically is performed by the PEs. By way of example, an edge ND that supports multiple VNEs may be deployed as a PE; and a VNE may be configured with a VPN protocol, and thus that VNE is referred as a VPN VNE.

Some NDs provide support for VPLS (Virtual Private LAN Service). For example, in a VPLS network, end user devices access content/services provided through the VPLS network by coupling to CEs, which are coupled through PEs coupled by other NDs. VPLS networks can be used for implementing triple play network applications (e.g., data applications (e.g., high-speed Internet access), video applications (e.g., television service such as IPTV (Internet Protocol Television), VoD (Video-on-Demand) service), and voice applications (e.g., VoIP (Voice over Internet Protocol) service)), VPN services, etc. VPLS is a type of layer 2 VPN that can be used for multi-point connectivity. VPLS networks also allow end use devices that are coupled with CEs at separate geographical locations to communicate with each other across a Wide Area Network (WAN) as if they were directly attached to each other in a Local Area Network (LAN) (referred to as an emulated LAN).

In VPLS networks, each CE typically attaches, possibly through an access network (wired and/or wireless), to a bridge module of a PE via an attachment circuit (e.g., a virtual link or connection between the CE and the PE). The bridge module of the PE attaches to an emulated LAN through an emulated LAN interface. Each bridge module acts as a "Virtual Switch Instance" (VSI) by maintaining a forwarding table that maps MAC addresses to pseudowires and attachment circuits. PEs forward frames (received from CEs) to destinations (e.g., other CEs, other PEs) based on the MAC destination address field included in those frames.

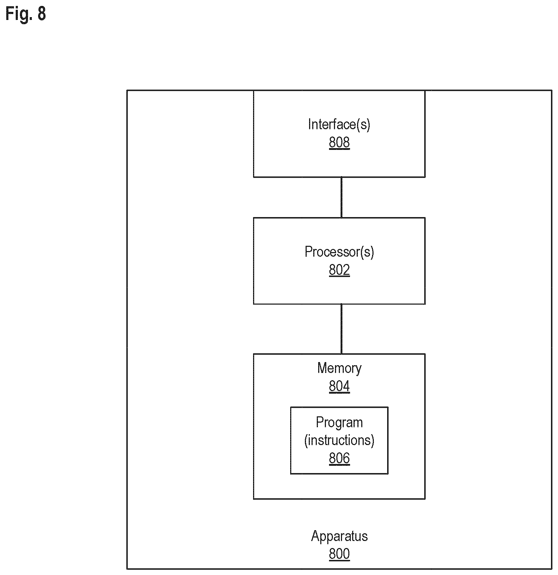

Figure 8 illustrates an apparatus 800 including a processor 802, according to some embodiments. The apparatus, 800, may include a processing circuitry (one or more than one processor), 802, coupled to an interface, 808, and to the memory 804. The apparatus, 800, may comprise more than one interface. By way of example, the interface 808, the processor(s) 802, and the memory 804 may be connected in series as illustrated in Figure 8. Alternatively, these components 802, 804 and 808 may be coupled to an internal bus system of the apparatus, 800. The memory 804 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory, 804, may contain a computer program (software or instructions), 806, and/or control parameters. The memory, 804, may include suitably configured program code to be executed by the processor(s), 802, so as to implement the above-described method as explained in connection with Figures 1 - 5.

An embodiment may be an article of manufacture in which a non-transitory machine-readable storage medium (such as microelectronic memory) has stored thereon instructions (e.g., computer code) which program one or more data processing components (generically referred to here as a "processor") to perform the operations described above. **In** other embodiments, some of these operations might be performed by specific hardware components that contain hardwired logic (e.g., dedicated digital filter blocks and state machines). Those operations might alternatively be performed by any combination of programmed data processing components and fixed hardwired circuit components.

While the invention has been described in terms of several embodiments, those skilled in the art will recognize that the invention is not limited to the embodiments described, can be practiced with modification and alteration within the scope of the appended claims. The description is thus to be regarded as illustrative instead of limiting.

For example, while the flow diagrams in the figures show a particular order of operations performed by certain embodiments of the invention, it should be understood that such order is exemplary (e.g., alternative embodiments may perform the operations in a different order, combine certain operations, overlap certain operations, etc.).

## Claims

1. A method for an intent handler implemented by a first electronic device, the method comprising:
receiving (505), at the intent handler implemented by the first electronic device, an intent request from an intent owner implemented by a second electronic device, wherein the intent request comprises one or more expectations and one or more parameters including a maximum proposal time parameter;
determining (510) a proposal time based on an estimated time to process the intent request;
in response to determining that the proposal time is less than or equal to the maximum proposal time parameter, determining (515) a proposal for the intent request based on the one or more expectations, wherein the one or more expectations define requirements for a service to be delivered and wherein the proposal comprises one or more report parameters for an estimated delivery of the service using an autonomous domain; and
in response to determining that the proposal time is less than or equal to the maximum proposal time parameter, sending (520), to the intent owner, the proposal.

2. The method of claim 1, wherein the one or more parameters further includes a minimum accuracy level parameter and wherein determining the proposal is also based on whether a proposal accuracy level satisfies the minimum accuracy level parameter.

3. The method of claim 2, further comprising:
determining the proposal accuracy level based on model accuracy levels of one or more trained machine learning models, wherein the one or more trained machine learning models determine the estimated delivery of the service using the autonomous domain.

4. The method of any of claims 1-3, wherein the one or more report parameters comprise an accuracy level report parameter and determining the proposal comprises determining the accuracy level report parameter.

5. The method of claim 4, wherein determining the proposal comprises:
determining one or more outputs from a trained machine learning model of the one or more trained machine learning models; and
determining the accuracy level report parameter using a model accuracy level of the one or more outputs.

6. The method of any of claims 1-5, the method further comprising:
allocating one or more network elements of the autonomous domain to delivery of the service according to the proposal.

7. The method of any of claims 1-6, wherein determining the proposal time comprises:
determining a time when the intent request is received; and
determining the proposal time as a sum of the estimated time to process the intent request and the time the intent request is received.

8. The method of any of claims 1-7, further comprising:
determining a priority of the intent request; and determining a send time using the priority and the proposal time, wherein the sending the proposal comprises sending the proposal before or at the send time.

9. The method of claim 8, wherein determining the priority of the intent request comprises:
determining the priority of the intent request based on the intent owner.

10. The method of any of claims 8-9, wherein the one or more expectations of the intent request include the priority.

11. A machine-readable medium comprising computer program code which when executed by a computer carries out the method steps of any of claims 1-10.

12. A first electronic device implementing an intent handler, the first electronic device comprising:
a processor and a memory, the memory containing instructions executable by the processor whereby the first electronic device is operative to:
receive (505), at the intent handler implemented by the first electronic device, an intent request from an intent owner implemented by a second electronic device, wherein the intent request comprises one or more expectations and one or more parameters including a maximum proposal time parameter;
determine (510) a proposal time based on an estimated time to process the intent request;
in response to determining that the proposal time is less than or equal to the maximum proposal time parameter, determine (515) a proposal for the intent request based on the one or more expectations, wherein the one or more expectations define requirements for a service to be delivered and wherein the proposal comprises one or more report parameters for an estimated delivery of the service using an autonomous domain; and
in response to determining that the proposal time is less than or equal to the maximum proposal time parameter, send (520), to the intent owner, the proposal.

13. The electronic device of claim 12, wherein the one or more parameters further includes a minimum accuracy level parameter and wherein determining the proposal is also based on whether a proposal accuracy level satisfies the minimum accuracy level parameter.

14. The electronic device of claim 13, wherein the first electronic device is operative to:
determine the proposal accuracy level based on model accuracy levels of one or more trained machine learning models, wherein the one or more trained machine learning models determine the estimated delivery of the service using the autonomous domain.

15. The electronic device of any of claims 12-14, wherein the one or more report parameters comprise an accuracy level report parameter and determining the proposal comprises determining the accuracy level report parameter.

## Patentansprüche

1. Verfahren für einen Absichtshandler, der von einer ersten elektronischen Vorrichtung implementiert wird, wobei das Verfahren Folgendes umfasst:
Empfangen (505), bei dem Absichtshandler, der durch die erste elektronische Vorrichtung implementiert wird, einer Absichtsanfrage von einem Absichtsinhaber, der durch eine zweite elektronische Vorrichtung implementiert wird, wobei die Absichtsanfrage eine oder mehrere Erwartungen und einen oder mehrere Parameter, einschließlich eines maximalen Vorschlagszeitparameters, umfasst;
Bestimmen (510) einer Vorschlagszeit basierend auf einer geschätzten Bearbeitungszeit, um die Absichtsanfrage zu verarbeiten;
als Reaktion auf Bestimmen, dass die Vorschlagszeit kleiner oder gleich dem maximalen Vorschlagszeitparameter ist, Bestimmen (515) eines Vorschlags für die Absichtsanfrage basierend auf der einen oder den mehreren Erwartungen, wobei die eine oder mehreren Erwartungen Anforderungen an einen bereitzustellenden Dienst definieren und wobei der Vorschlag einen oder mehrere Berichtsparameter für eine geschätzte Bereitstellung des Dienstes unter Verwendung einer autonomen Domäne umfasst; und
als Reaktion auf Bestimmen, dass die Vorschlagszeit kleiner oder gleich dem maximalen Vorschlagszeitparameter ist, Senden (520), an den Absichtsinhaber, des Vorschlags.

2. Verfahren nach Anspruch 1, wobei der eine oder die mehreren Parameter ferner einen minimalen Genauigkeitsgradparameter beinhalten und wobei Bestimmen des Vorschlags auch darauf basiert, ob ein Vorschlagsgenauigkeitsgrad den minimalen Genauigkeitsgradparameter erfüllt.

3. Verfahren nach Anspruch 2, ferner umfassend:
Bestimmen des Vorschlagsgenauigkeitsgrads basierend auf Modellgenauigkeitsgraden eines oder mehrerer trainierter Maschinenlernmodelle, wobei das eine oder die mehreren trainierten Maschinenlernmodelle die geschätzte Bereitstellung des Dienstes unter Verwendung der autonomen Domäne bestimmen.

4. Verfahren nach einem der Ansprüche 1-3, wobei der eine oder die mehreren Berichtsparameter einen Genauigkeitsgradberichtsparameter umfassen und Bestimmen des Vorschlags Bestimmen des Genauigkeitsgradberichtsparameters umfasst.

5. Verfahren nach Anspruch 4, wobei Bestimmen des Vorschlags Folgendes umfasst:
Bestimmen einer oder mehrerer Ausgaben aus einem trainierten Maschinenlernmodell des einen oder der mehreren trainierten Maschinenlernmodelle; und
Bestimmen des Genauigkeitsgradberichtsparameters unter Verwendung eines Modellgenauigkeitsgrads der einen oder mehreren Ausgaben.

6. Verfahren nach einem der Ansprüche 1-5, ferner umfassend:
Zuweisen eines oder mehrerer Netzwerkelemente der autonomen Domäne zur Bereitstellung des Dienstes gemäß dem Vorschlag.

7. Verfahren nach einem der Ansprüche 1-6, wobei Bestimmen der Vorschlagszeit Folgendes umfasst:
Bestimmen einer Zeit, zu der die Absichtsanfrage empfangen wird; und
Bestimmen der Vorschlagszeit als eine Summe der geschätzten Zeit, um die Absichtsanfrage verarbeiten, und der Zeit, zu der die Absichtsanfrage empfangen wird.

8. Verfahren nach einem der Ansprüche 1-7, ferner umfassend:
Bestimmen einer Priorität der Absichtsanfrage; und Bestimmen einer Sendezeit unter Verwendung der Priorität und der Vorschlagszeit, wobei das Senden des Vorschlags Senden des Vorschlags vor oder zu der Sendezeit umfasst.

9. Verfahren nach Anspruch 8, wobei Bestimmen der Priorität der Absichtsanfrage Folgendes umfasst:
Bestimmen der Priorität der Absichtsanfrage basierend auf dem Absichtsinhaber.

10. Verfahren nach einem der Ansprüche 8-9, wobei die eine oder mehreren Erwartungen der Absichtsanfrage die Priorität beinhalten.

11. Maschinenlesbares Medium, das Computerprogrammcode umfasst, der, wenn er von einem Computer ausgeführt wird, die Verfahrensschritte nach einem der Ansprüche 1-10 ausführt.

12. Erste elektronische Vorrichtung, die einen Absichtshandler implementiert, wobei die erste elektronische Vorrichtung Folgendes umfasst:
einen Prozessor und einen Speicher, wobei der Speicher Anweisungen enthält, die vom Prozessor ausgeführt werden können, wodurch die erste elektronische Vorrichtung betriebsfähig ist zum:
Empfangen (505), bei dem Absichtshandler, der durch die erste elektronische Vorrichtung implementiert wird, einer Absichtsanfrage von einem Absichtsinhaber, der durch eine zweite elektronische Vorrichtung implementiert wird, wobei die Absichtsanfrage eine oder mehrere Erwartungen und einen oder mehrere Parameter, einschließlich eines maximalen Vorschlagszeitparameters, umfasst;
Bestimmen (510) einer Vorschlagszeit basierend auf einer geschätzten Bearbeitungszeit, um die Absichtsanfrage zu verarbeiten;
als Reaktion auf Bestimmen, dass die Vorschlagszeit kleiner oder gleich dem maximalen Vorschlagszeitparameter ist, Bestimmen (515) eines Vorschlags für die Absichtsanfrage basierend auf der einen oder den mehreren Erwartungen, wobei die eine oder mehreren Erwartungen Anforderungen an einen bereitzustellenden Dienst definieren und wobei der Vorschlag einen oder mehrere Berichtsparameter für eine geschätzte Bereitstellung des Dienstes unter Verwendung einer autonomen Domäne umfasst; und
als Reaktion auf Bestimmen, dass die Vorschlagszeit kleiner oder gleich dem maximalen Vorschlagszeitparameter ist, Senden (520), an den Absichtsinhaber, des Vorschlags.

13. Elektronische Vorrichtung nach Anspruch 12, wobei der eine oder die mehreren Parameter ferner einen minimalen Genauigkeitsgradparameter beinhalten und wobei Bestimmen des Vorschlags auch darauf basiert, ob ein Vorschlagsgenauigkeitsgrad den minimalen Genauigkeitsgradparameter erfüllt.

14. Elektronische Vorrichtung nach Anspruch 13, wobei die erste elektronische Vorrichtung betriebsfähig ist zum:
Bestimmen des Vorschlagsgenauigkeitsgrads basierend auf Modellgenauigkeitsgraden eines oder mehrerer trainierter Maschinenlernmodelle, wobei das eine oder die mehreren trainierten Maschinenlernmodelle die geschätzte Bereitstellung des Dienstes unter Verwendung der autonomen Domäne bestimmen.

15. Elektronische Vorrichtung nach einem der Ansprüche 12-14, wobei der eine oder die mehreren Berichtsparameter einen Genauigkeitsgradberichtsparameter umfassen und Bestimmen des Vorschlags Bestimmen des Genauigkeitsgradberichtsparameters umfasst.

## Revendications

1. Procédé destiné à un gestionnaire d'intentions mis en œuvre par un premier dispositif électronique, le procédé comprenant :
la réception (505), au niveau du gestionnaire d'intentions mis en œuvre par le premier dispositif électronique, d'une demande d'intention provenant d'un propriétaire d'intention mis en œuvre par un second dispositif électronique, dans lequel la demande d'intention comprend une ou plusieurs attentes et un ou plusieurs paramètres, incluant un paramètre de délai de proposition maximal ;
la détermination (510) d'un délai de proposition sur la base d'un délai estimé pour traiter la demande d'intention ;
s'il est déterminé que le délai de proposition est inférieur ou égal au paramètre de délai de proposition maximal, la détermination (515) d'une proposition pour la demande d'intention sur la base des une ou plusieurs attentes, dans lequel les une ou plusieurs attentes définissent les exigences d'un service à fournir et dans lequel la proposition comprend un ou plusieurs paramètres de rapport pour une fourniture estimée du service à l'aide d'un domaine autonome ; et
s'il est déterminé que le délai de proposition est inférieur ou égal au paramètre de délai de proposition maximal, l'envoi (520) de la proposition au propriétaire d'intention.

2. Procédé selon la revendication 1, dans lequel les un ou plusieurs paramètres incluent en outre un paramètre de niveau de précision minimal et dans lequel la détermination de la proposition est basée également sur le fait qu'un niveau de précision de proposition satisfasse au paramètre de niveau de précision minimal.

3. Procédé selon la revendication 2, comprenant en outre :
la détermination du niveau de précision de proposition en fonction de niveaux de précision de modèle d'un ou plusieurs modèles d'apprentissage automatique entraînés, dans lequel les un ou plusieurs modèles d'apprentissage automatique entraînés déterminent la fourniture estimée du service en utilisant le domaine autonome.

4. Procédé selon l'une quelconque des revendications 1-3, dans lequel les un ou plusieurs paramètres de rapport comprennent un paramètre de rapport de niveau de précision et la détermination de la proposition comprend la détermination du paramètre de rapport de niveau de précision.

5. Procédé selon la revendication 4, dans lequel la détermination de la proposition comprend :
la détermination d'une ou plusieurs sorties d'un modèle d'apprentissage automatique entraîné des un ou plusieurs modèles d'apprentissage automatique entraînés ; et
la détermination du paramètre de rapport de niveau de précision à l'aide d'un niveau de précision de modèle des une ou plusieurs sorties.

6. Procédé selon l'une quelconque des revendications 1-5, le procédé comprenant en outre :
l'allocation d'un ou plusieurs éléments de réseau du domaine autonome à la fourniture du service conformément à la proposition.

7. Procédé selon l'une quelconque des revendications 1-6, dans lequel la détermination du délai de proposition comprend :
la détermination d'une heure de réception de la demande d'intention ; et
la détermination du délai de proposition comme étant une somme du délai estimé pour traiter la demande d'intention et de l'heure de réception de la demande d'intention.

8. Procédé selon l'une quelconque des revendications 1-7, comprenant en outre :
la détermination d'une priorité de la demande d'intention ; et la détermination d'une heure d'envoi en utilisant la priorité et le délai de proposition, dans lequel l'envoi de la proposition comprend l'envoi de la proposition avant ou à l'heure d'envoi.

9. Procédé selon la revendication 8, dans lequel la détermination de la priorité de la demande d'intention comprend :
la détermination de la priorité de la demande d'intention en fonction du propriétaire d'intention.

10. Procédé selon l'une quelconque des revendications 8-9, dans lequel les une ou plusieurs attentes de la demande d'intention incluent la priorité.

11. Support lisible par machine comprenant un code de programme informatique qui, lorsqu'il est exécuté par un ordinateur, met en œuvre les étapes du procédé selon l'une quelconque des revendications 1-10.

12. Premier dispositif électronique mettant en œuvre un gestionnaire d'intentions, le premier dispositif électronique comprenant :
un processeur et une mémoire, la mémoire contenant des instructions exécutables par le processeur, selon lequel le premier dispositif électronique est conçu pour :
recevoir (505), au niveau du gestionnaire d'intentions mis en œuvre par le premier dispositif électronique, une demande d'intention provenant d'un propriétaire d'intention mis en œuvre par un second dispositif électronique, dans lequel la demande d'intention comprend une ou plusieurs attentes et un ou plusieurs paramètres incluant un paramètre de délai de proposition maximal ;
déterminer (510) un délai de proposition reposant sur un délai estimé pour traiter la demande d'intention ;
s'il est déterminé que le délai de proposition est inférieur ou égal au paramètre de délai de proposition maximal, déterminer (515) une proposition pour la demande d'intention basée sur les une ou plusieurs attentes, dans lequel les une ou plusieurs attentes définissent les exigences d'un service à fournir et dans lequel la proposition comprend un ou plusieurs paramètres de rapport pour une fourniture estimée du service à l'aide d'un domaine autonome ; et
s'il est déterminé que le délai de proposition est inférieur ou égal au paramètre de délai de proposition maximal, envoyer (520) la proposition au propriétaire d'intention.

13. Dispositif électronique selon la revendication 12, dans lequel les un ou plusieurs paramètres incluent en outre un paramètre de niveau de précision minimal et dans lequel la détermination de la proposition est basée également sur le fait qu'un niveau de précision de proposition satisfasse au paramètre de niveau de précision minimal.

14. Dispositif électronique selon la revendication 13, dans lequel le premier dispositif électronique est conçu pour :
déterminer le niveau de précision de proposition en fonction des niveaux de précision de modèle d'un ou plusieurs modèles d'apprentissage automatique entraînés, dans lequel les un ou plusieurs modèles d'apprentissage automatique entraînés déterminent la fourniture estimée du service en utilisant le domaine autonome.

15. Dispositif électronique selon l'une quelconque des revendications 12-14, dans lequel les un ou plusieurs paramètres de rapport comprennent un paramètre de rapport de niveau de précision et la détermination de la proposition comprend la détermination du paramètre de rapport de niveau de précision.
